# EUROPEAN PATENT APPLICATION

(11) **EP 2 067 987 A2**
(43) Date of publication of application: **10.06.2009**
(21) Application number: 08382069.6
(22) Date of filing: 28.11.2008
(51) Int. Cl.: F03D 5/02

(54) **Wind generator with movable sails**

(30) Priority: 05.12.2007 ES 200703238
(71) Applicant: Teilo Alabarte S.L., 01306 La Puebla de la Barca - Alava (ES)
(72) Inventor: Echepare Fernandez, Enrique, 01306, LA PUEBLA DE LA BARCA (ES)
(74) Representative: Urizar Anasagasti, Jesus Maria

(57) **Abstract**

A wind generator with movable sails is disclosed, comprising a rotating platform (1) which rotates according to a vertical axis forming the supporting structure of a wind turbine (2) formed by several sails (3) which move guided by respective side chains (4) engaging with end pinions (5), the assembly thereof forming a plane that is either vertically or horizontally inclined with respect to the wind, thus providing the forward movement of said chains (4) which move a common shaft (8) on which the electric generator (7) is coupled.

## Description

### Object of the Invention

The present invention relates to a wind generator comprising a base structure on which there is mounted a wind turbine moved by an electric generator and preferably a series of photovoltaic panels which are operative when there is not sufficient wind for operating the wind generator.

This wind generator is of the type of the having a series of sails or blades moving due to the effect of the wind, describing a closed circuit moving a shaft which in turn operates an electric generator.

### Background of the Invention

There are currently some wind generators operating by means of a series of blades pushed by the wind in order to harness its energy. For example, document ES-547683 describes a wind generator formed by a frame facing the wind, several sails connected by two cables and a belt moving and rotating therein, supported and wound on power generating sheave wheels and sheaves.

### Description of the Invention

The wind generator of the invention has a base formed by a rotating horizontal platform forming the supporting structure of a wind turbine, which can be suitably inclined with respect to the wind direction so that its blades or sails receive its thrust and move it. This turbine is formed by several sails or blades which are mounted parallel and spaced from one another and which move guided in respective side chains engaging with end pinions, the assembly thereof forming a plane that is inclined with respect to the wind so that the air is incident on said sails, suitably pushing them.

Each of these sails has a concave-convex profile and rotates in a longitudinal shaft in order to make the concave part face the wind in one direction and, upon the return, the convex part, which offers less resistance, thus providing the forward movement of said lateral chains or transmission means moving a common shaft on which the electric generator is coupled.

The wind turbine can be arranged with respect to the wind direction forming an angle in the vertical or horizontal plane. When it is inclined in a vertical plane, it is mounted on a lower rotating shaft and supported on adjustable scissors which allow changing the angle of inclination thereof and, accordingly, the angle of incidence of the wind. In a normal operating position, it forms a 45° angle with the horizontal, but this angle decreases if the wind increases beyond a predetermined speed, or it is even placed in the horizontal position when the wind is excessively strong.

According to the present invention, it has been envisaged to complement the task of generating renewable energy of the wind turbine by means of photovoltaic panels. They are mounted in this case above said turbine, being oriented by means of a solar tracker controlling the position of the rotating supporting platform, making it face the sun, and the inclination of the turbine and, accordingly, of the solar panels depending on the seasonal position of the sun.

These panels are articulated on respective side shafts of the turbine and are located in the vertical position when there is sufficient wind for operating said turbine and in the horizontal position, aligned above said turbine, when there are no wind conditions and they receive sunlight. These photovoltaic panels are preferably longitudinally divided into several sections, of which sections at least the one located closest to the shaft of the turbine is articulated so as to allow lowering it when the turbine is in the horizontal position because of storm conditions, such that in this position they close the front of the machine.

In an alternative embodiment, the wind turbine is covered at the top by several longitudinal photovoltaic panels articulated at the upper side and provided with struts which allow lifting them in order to open windows channeling the wind toward the sails or blades of the turbine as long as there are favorable wind conditions, or lower them in order to be located in a continuous plane above said turbine when there is no wind and they receive sunlight.

A constructive aspect to be taken into account in the operation of the machine consists of a deflector located in the rotating platform, in front of and parallel to the rotating shaft of the wind turbine. This element closes the lower part of the machine facing the wind and channels the air toward the sails of said turbine, increasing their performance.

As indicated, the wind turbine is also arranged with the sails in the vertical position, forming as a whole a vertical plane perpendicular to the rotating platform by one of its diameters. This plane forms an approximately 45° angle with respect to the wind direction when the latter has sufficient force for moving the turbine; when the wind conditions are so strong that they may damage the machine, it is immobilized in a direction coinciding with the wind, all of which is achieved by controlling the rotation of the rotating base platform on which it is supported and which forms part of the machine.

In this latter case, the vertical wind turbine is optionally accompanied in the back by a series of fixed solar panels inclined approximately 45° with respect to the horizontal, oriented toward the sun when the wind conditions are not sufficient for moving the wind turbine, by virtue of the rotation of the base platform.

The invention therefore provides a wind or combined machine having little impact on the environment compared with traditional wind generators, and it also operates or can operate as a photovoltaic generator when wind conditions do not allow its operation, whereby it produces energy at virtually all times of the day and night.

### Description of the Drawings

To complement the description being made and for the purpose of better understanding the features of the invention, a set of drawings is attached to the present specification in which depicts the following with an illustrative and nonlimiting character:
Figure 1 shows respective side and profile elevational views of a wind generator carried out according to the invention, in operation.
Figure 2 shows a side view of the same apparatus when it is in the inoperative position, be it because of a storm, repair or maintenance.
Figure 3 depicts respective side and profile elevational views of a wind generator similar to the previous one, in this case provided with side solar panels.
Figure 4 depicts respective views of the previous apparatus when it is not operating as a wind generator, but rather as a photovoltaic generator.
Figure 5 shows the same previous apparatus folded in the position when there is a storm that does not allow its use as a wind generator.
Figure 6 shows a variation of the generator of Figure 1, with a different arrangement of the complementary photovoltaic panels.
Figure 7 shows respective side, profile and plan elevational views of a wind generator in which the arrangement of the wind turbine (2) has been modified and in this case is located in a vertical plane.
Figure 8 shows a plan view of a wind generator similar to that of the previous view when there are very strong winds.

### Preferred Embodiment of the Invention

As can be seen in the mentioned figures, the wind generator of the invention is mounted on a horizontal rotating platform (1) on a concrete base (17), the movement of which is controlled and achieved by means of a motor (6). Located on said platform (1) there is a wind turbine (2) and, optionally, photovoltaic panels generating energy depending on the wind conditions: when there is sufficient wind it is preferable that the wind turbine operates because of its higher performance, and when there is not sufficient wind for its operation, the photovoltaic generation of the solar panels is used for its operation. The protection of the machine in those conditions in which the wind has such a force that it could break the machine is also envisaged.

The wind turbine (2) is formed by several sails or blades (3) having a concave-convex profile and all of them are mounted parallel to one another on respective similar chains or transmission means (4) forming a closed circuit on respective end pinions (5), such that in one direction, when they are pushed by the wind, they place the concave face against the wind, whereas upon the return, the wind is incident on the convex face, which offers less resistance and, accordingly, provides its forward movement in the wind direction. In the forward movement of the sails (3), and accordingly of the chains (4), the pinions (5) and shafts (8) connected to the former and in turn through a mechanical transmission with the electric generator (7), are caused to rotate.

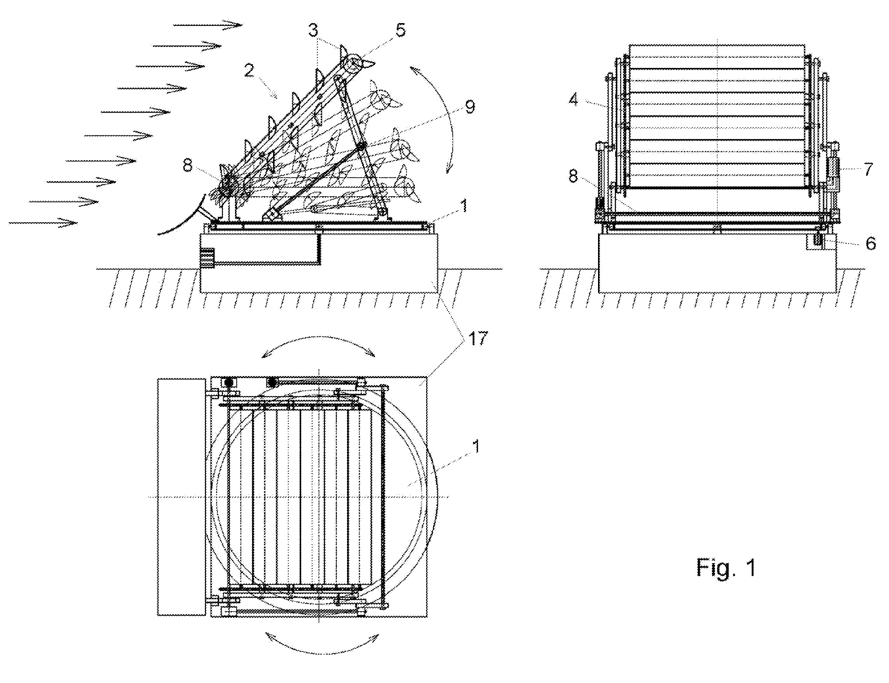

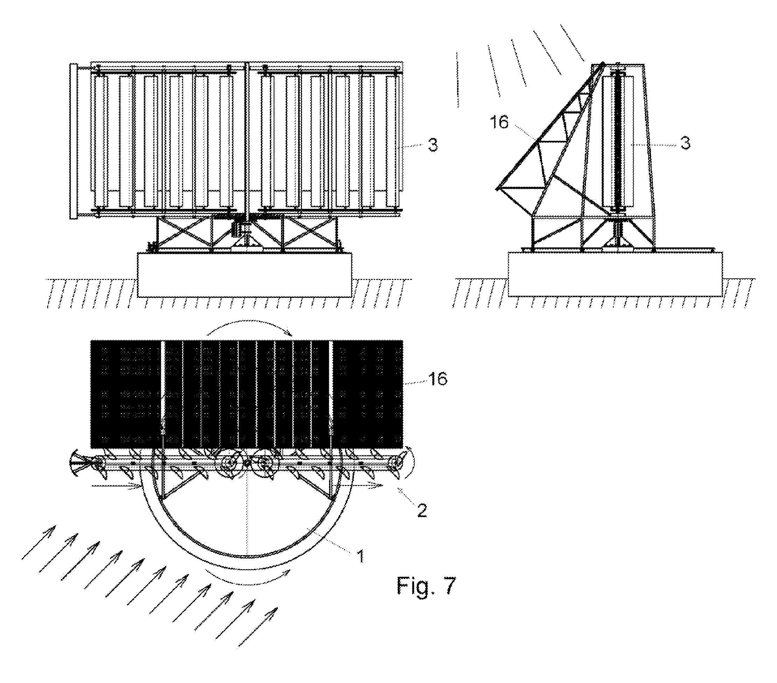

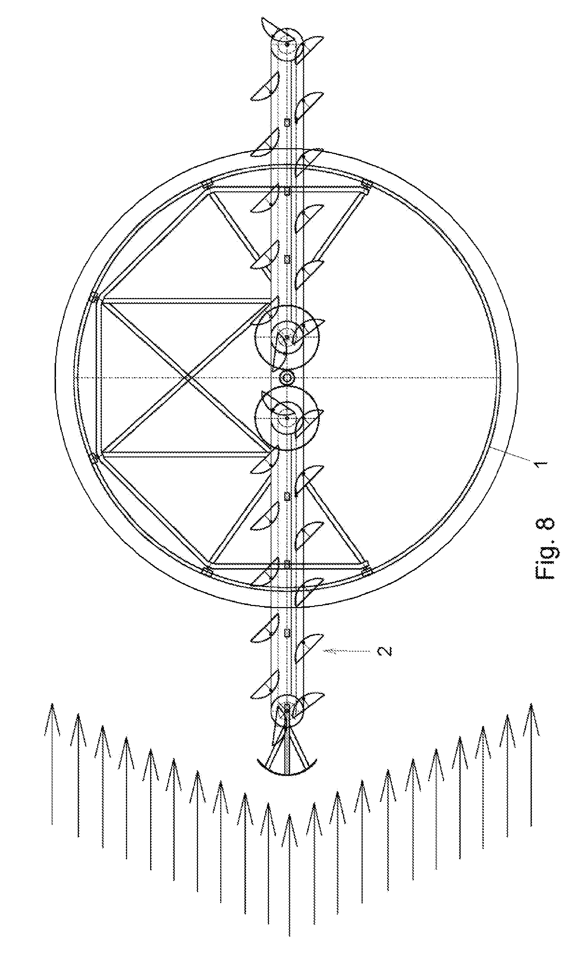

Figures 1 to 6 depict a machine having a wind turbine (2) inclined according to a vertical plane with respect to the wind when it is in the operative position. In contrast, in Figures 7 and 8 the turbine adopts an angular position with respect to the wind, inclined according to a horizontal plane.

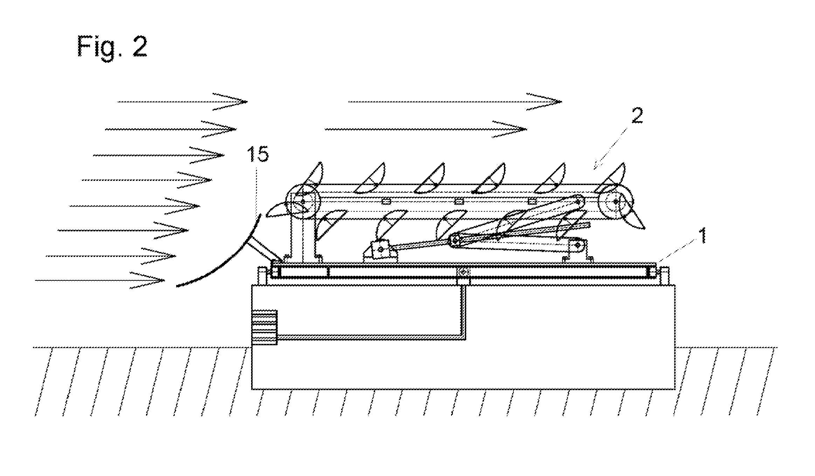

The turbine of Figures 1 to 6 is articulated on a lower shaft (8) parallel to any of its blades (3) and supported on adjustable scissors (9) which allow placing it in different inclination positions depending on the force of the wind or, as shown in Figure 2, horizontally in those cases in which there is a very strong wind, or also for machine maintenance or repair.

The operation of this generator is simple: the rotating platform (1) orients the wind turbine (2) in a direction which faces the wind, for which purpose it is controlled by an electronic circuit incorporating sensors which sense the direction and force of the wind, and a solar tracker, and depending on its force, it places it such that it has more or less inclination, or it directly lowers and folds it, as seen in Figure 2 for example.

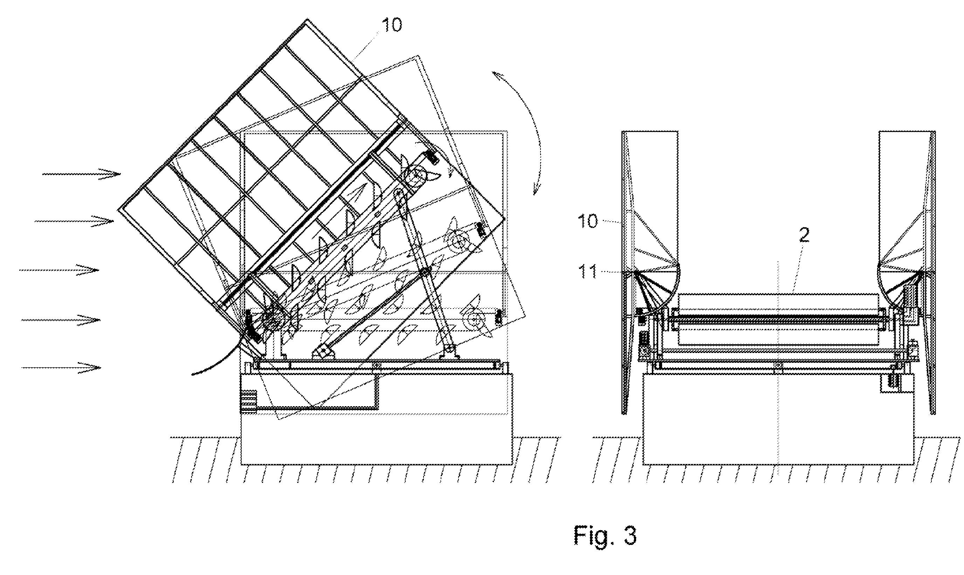

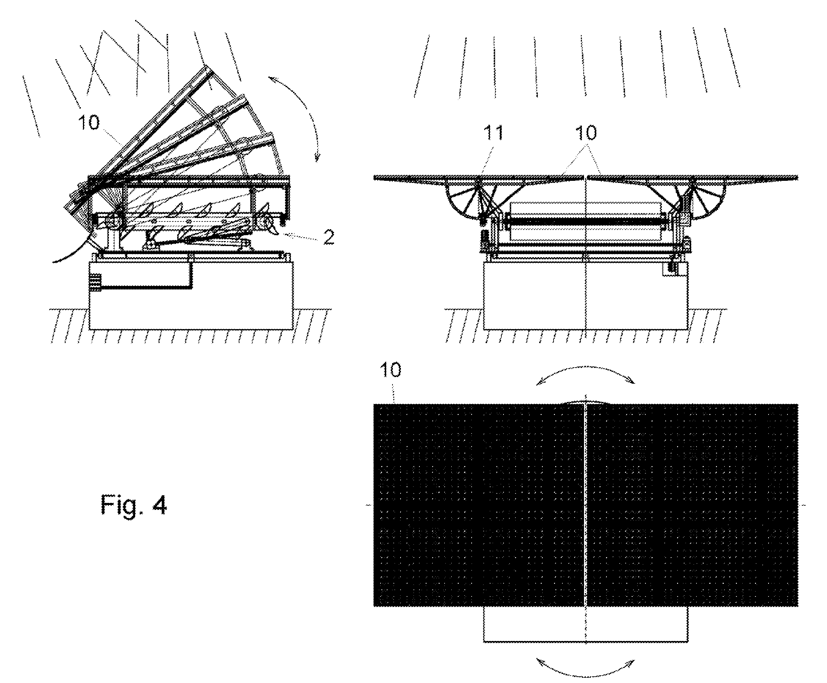

This wind machine is preferably complemented with photovoltaic panels (10) which are articulated on shafts (11) located on the sides of the turbine (2) and are placed in the vertical position (see Figure 3) when they are not operative, or when there are favorable wind conditions, or in the operative position above said turbine (2), as can be seen in Figure 4. The position of said panels (10) is controlled by a solar tracker controlling the rotation of the base platform (1) until orienting it toward the sun from sunrise to sunset, and controlling the inclination of said panels, rotating the turbine and the panels through the shaft (8), so as to place them perpendicular to the sun depending on its seasonal position.

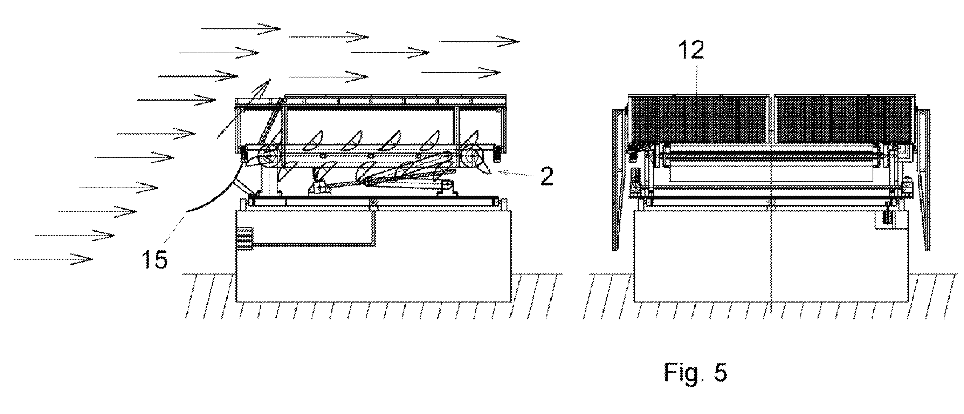

Figure 5 shows a third position, or protective position, of this combined machine when there is a very heavy storm or heavy snow. In this case the turbine (2) is placed horizontally, as in Figure 2, and the upper panels (10) are divided into longitudinal sections so as to lower the end sections (12) to a position close to the vertical for the purpose of closing off the entry of air into the machine from this side which is facing the wind in such conditions.

In this type of vertically inclined turbine, the arrangement of a deflector (15) closing the rotating base in front of the rotating shaft (8) thereof and projecting the air toward the same, thus favoring its operation, is envisaged.

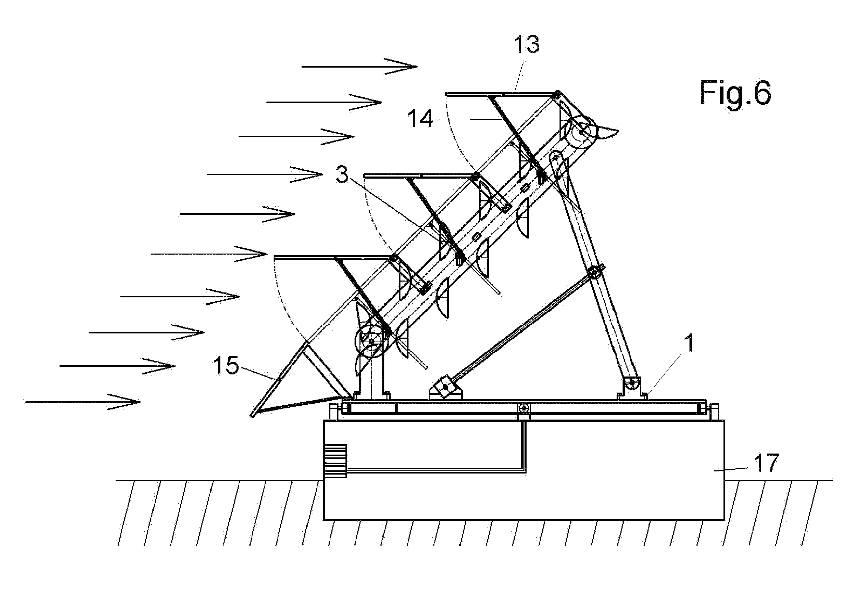

Figure 6 offers a variant for installing the solar panels (13), in this case formed by several parallel panels articulated in the upper side and secured by adjustable struts (14), being located in the horizontal position as can be seen in the figure when the wind is favorable, all of the panels being lowered and aligned, covering the wind turbine when optimal wind conditions for its operation do not exist, or in any intermediate position when the wind conditions are strong and it is necessary to reduce the thrust thereof on the sails (3).

In Figures 7 and 8, the position of the wind turbine (2) has been radically changed, being placed in this case with its blades (3) in the vertical position, defining as a whole a vertical plane perpendicular to the rotating platform (1) by one of its diameters. The position of this turbine with respect to the wind is controlled by the rotation of the rotating platform, such that it is located forming an approximately 45° angle when wind conditions are favorable, as can be seen in Figure 7, in the same direction as the wind when the latter adopts considerable force and it is necessary to protect the machine (see Figure 8), or an angle greater than 45° which is adjusted by means of the rotation of the base platform (1), thereby adjusting the angle of incidence, and accordingly, the thrust of the wind on the sails (3).

This type of machine can also incorporate photovoltaic panels (16), in this case fixed panels, behind the turbine and forming an approximately 45° angle with the vertical. When the wind is not sufficient to operate the wind turbine (2), the rotating platform (1) directs the panels (16) toward the sun so that they can receive its energy.

The platform (1) rotates supported in a circular rail an has a drive motor (6) for its mobilization, as well as at least one braking unit immobilizing the machine in the suitable position, depending on the operating conditions as a wind machine, photovoltaic machine or in the protective position because of a storm. This is all controlled by an electronic control circuit powered by batteries, which logically can be the same batteries powering the photovoltaic panels.

Having sufficiently described the nature of the invention as well as a preferred embodiment thereof, it is hereby stated for all intents and purposes that the materials, shape, size and arrangement of the described elements may be modified provided that this does not alter the essential features of the invention which are claimed below.

## Claims

1. A wind generator with movable sails, comprising a base structure on which there is mounted a wind turbine moved by an electric generator and preferably a series of photovoltaic panels which are operative when there is not sufficient wind for operating the wind generator, **characterized in that** it comprises a rotating platform (1) which rotates according to a vertical axis forming the supporting structure of a wind turbine (2), which is formed by several parallel spaced sails (3) which move guided by respective side chains (4) engaging with end pinions (5), the assembly thereof forming a plane that is either vertically or horizontally inclined with respect to the wind; each of said sails (3) has a concave-convex profile and rotates in a longitudinal shaft in order to make the concave part face the wind and, upon the return, the convex part, which offers less resistance, thus providing the forward movement of said chains (4) which move a common shaft (8) on which the electric generator (7) is coupled.

2. The wind generator according to the previous claim, **characterized in that** the wind turbine (2) is inclined in a vertical plane, mounted on a lower rotating shaft (8) and is supported on adjustable scissors (9) which allow changing the angle of inclination thereof and, accordingly, the angle of incidence of the wind, being placed in a normal operating position with a 45° angle, which decreases if the wind increases beyond a predetermined speed, or it is placed in the horizontal position when the wind is excessively strong.

3. The wind generator according to claim 2, **characterized in that** the wind turbine (2) is laterally accompanied by respective photovoltaic panels (10) rotating on their respective shafts (11) parallel to the turbine (2) which are located in the vertical position when there is sufficient wind for operating said turbine and in the horizontal position, aligned above said turbine, when there are no wind conditions and they receive sunlight, being oriented by means of a solar tracker controlling the position of the platform (1), making it face the sun, and the inclination of the turbine and solar panels (10) depending on the seasonal position of the sun.

4. The wind generator according to claim 3, **characterized in that** said photovoltaic panels (10) are longitudinally divided into several sections (12), of which sections at least the one located closest to the shaft (8) of the turbine is articulated so as to allow lowering it when the turbine is in the horizontal position because of storm or snow conditions, thus closing the front of the machine.

5. The wind generator according to claim 2, **characterized in that** the wind turbine (2) is covered at the top by several longitudinal photovoltaic panels (13), all of which are articulated at the upper side and provided with struts (14) which allow lifting them in order to open windows channeling the wind toward the sails (3) of said turbine, their opening being regulated depending on the force of the wind, or being lowered in order to be located in a continuous plane above said turbine when there is no wind and they receive sunlight, being oriented by means of a solar tracker controlling the position of the platform (1), making it face the sun, and the inclination of the turbine and solar panels (13) depending on the seasonal position of the sun.

6. The wind generator according to any of claims 2 to 5, **characterized in that** in front of and parallel to the rotating shaft (8) of the wind turbine (2), the platform (2) has a deflector (15) closing the lower part of the machine facing the wind and channeling the air toward the sails (3) of said turbine.

7. The wind generator according to claim 1, **characterized in that** the wind turbine (2) is arranged with the sails (3) in the vertical position, forming as a whole a vertical plane perpendicular to the rotating platform (1) by one of its diameters, which is located such that it forms an angle with respect to the wind direction of between 0 and 45°, depending on the force thereof and being immobilized in the same wind direction when its speed is so strong that it could damage the machine, all controlled by means of controlling the rotation of the rotating platform (1).

8. The wind generator according to claim 7, **characterized in that** the vertical wind turbine (2) is accompanied in the back by a series of fixed solar panels (16) inclined 45° with respect to the horizontal, oriented towards the sun when the wind conditions are not sufficient for moving the wind turbine (2), by virtue of the rotation of the base platform (1).
